# EUROPÄISCHE PATENTSCHRIFT

(11) **EP 0 827 516 B1**
(45) Veröffentlichungstag und Bekanntmachung des Hinweises auf die Patenterteilung: **11.04.2001**
(21) Anmeldenummer: 96919746.6
(22) Anmeldetag: 09.05.1996
(51) Int. Cl.: C08F 10/00, C08F 4/80

(54) **VERFAHREN ZUR HERSTELLUNG VON POLYMEREN AUS OLEFINISCH UNGESÄTTIGTEN MONOMEREN**
PROCESS FOR THE PRODUCTION OF POLYMERS FROM OLEFINICALLY UNSATURATED MONOMERS
PROCEDE DE FARBICATION DE POLYMERES CONSTITUES DE MONOMERES OLEFINIQUEMENT INSATURES

(30) Priorität: 22.05.1995 DE 19518738
(43) Veröffentlichungstag der Anmeldung: 11.03.1998
(73) Patentinhaber: BASF AKTIENGESELLSCHAFT, 67056 Ludwigshafen (DE)
(72) Erfinder: LIPPERT, Ferdinand, D-67098 Bad Dürkheim (DE); HÖHN, Arthur, D-67281 Kirchheim (DE); SCHAUSS, Eckard, D-67259 Heuchelheim (DE)
(86) Internationale Anmeldenummer: EP9601973
(87) Internationale Veröffentlichungsnummer: WO9637523

(56) Entgegenhaltungen:
- EP-A- 0 317 003
- EP-A- 0 569 032
- GB-A- 2 274 252

## Beschreibung

Die vorliegende Erfindung betrifft Verfahren zur Herstellung von Polymeren mit Molekulargewichten M_{w} größer 1000 g/mol durch Polymerisation von ausschließlich olefinisch ungesättigten Monomeren in Gegenwart eines Katalysatorsystems, welches aus
a) einem Metallhalogenid, -sulfat, -phosphat, -nitrat, -sulfonat oder -carboxylat mit einem Metall ausgewählt aus der Gruppe Ruthenium, Rhodium, Osmium, Iridium, Platin, Palladium,
b) einer Verbindung oder mehreren Verbindungen ausgewählt aus der Gruppe der Protonensäuren und Lewissäuren,
c) einer Chelatverbindung der allgemeinen Formel (I)

   R¹R²E¹-Z-E²R³R⁴ (I)

   in der die Substituenten und Indizes folgende Bedeutung haben:
   - E¹, E²: Stickstoff oder Phosphor,
   - Z: eine verbrückende Struktureinheit mit einem, zwei oder drei Brückenatomen auf Basis der Elemente Kohlenstoff oder Silicium,
   - R¹ bis R⁴: Substituenten ausgewählt aus der Gruppe der C₁- bis C₂₀-Kohlenstofforganischen und C₃- bis C₃₀-siliciumorganischen Reste, wobei die Reste als weitere Elemente Stickstoff, Sauerstoff, Schwefel oder Halogenatome enthalten können,
   als den aktiven Bestandteilen besteht.

Die Polymerisation von olefinischen Monomeren, beispielsweise von Ethylen, C₃- bis C₈-Alk-1-enen und Acrylsäurederivaten ist für unterschiedliche Polymerisationsverfahren gut bekannt, und die erhältlichen Polyolefine werden weithin in vielen Anwendungsgebieten, zum Beispiel als Folien, Formkörper und Fasern kommerziell verwendet.

Die Polymerisation der Olefine wird, unter anderem, durch Mischkatalysatoren aus Verbindungen der frühen Übergangsmetalle (Titan, Zirconium) und Alkylverbindungen der Hauptgruppenmetalle (z.B. Aluminiumalkyle) - sogenannte Ziegler-Katalysatoren - oder aber auch durch radikalische Initiatoren katalysiert, bzw. initiiert.

Ziegler-Katalysatoren haben jedoch einige Nachteile. Sie reagieren in der Regel, teilweise sehr heftig, mit Feuchtigkeit und Sauerstoff, wobei ihre katalytische Aktivität im allgemeinen verloren geht.

Weiterhin sind diese Katalysatoren im allgemeinen nicht in der Lage, ungesättigte Verbindungen, welche funktionelle Gruppen, wie zum Beispiel Carbonsäuregruppen oder Estergruppen, enthalten zu (co)polymerisieren.

Auch läuft die Polymerisation von cyclischen, olefinisch ungesättigten Monomeren oder aber von mehrfach olefinisch ungesättigten, linearen Monomeren oft nicht im gewünschten Sinne, nämlich als Polyinsertionsreaktion ab, sondern es treten Nebenreaktionen auf, wie Ringöffnung des cyclischen Monomeren oder Ringbildung des linearen Monomeren. Die dabei entstandenen Polymere weisen eine höhere Uneinheitlichkeit der chemischen Zusammensetzung als auch der Molekulargewichtsverteilung auf.

Radikalische Initiatoren sind wohl, im allgemeinen unter hohem Druck, in der Lage beispielsweise Olefine mit polaren, ungesättigten Monomeren zu copolymerisieren, jedoch ist der Einbau des Comonomeren oft uneinheitlich und die Polymerketten sind im allgemeinen uneinheitlich verzweigt, welches beispielsweise zu einer geringeren Polymerfolienqualität führt.

Durch diese Charakteristika ist der Anwendungsbereich der resultierenden Polymeren, die nach den verschiedenen bekannten Polymerisationsverfahren erhalten werden, eingeschränkt und es ist daher wünschenswert nach alternativen Polymeren zu suchen, welche die genannten Nachteile nicht oder nur in untergeordnetem Maße aufweisen.

EP-A 0 589 527 beschreibt Katalysatorsysteme für die Olefin-Homopolymerisation und Olefin-Copolymerisation auf der Basis von speziellen Palladium-Phosphankomplexen. Sowohl die präparative Zugänglichkeit als auch das Polymerisationsverhalten dieser Katalysatoren lassen jedoch zu wünschen übrig. So erhält man in polaren Lösungsmitteln wie Methanol, Ethylenglykol oder Wasser nur geringe Polymerisationsgrade (Oligomere mit 3 bis 20 Monomereinheiten). In unpolaren Solventien wie Diethylenglycoldimethylether (Diglyme) werden nur maximale Molmassen Mn von 5600 erreicht, wobei dann aber nur Spuren des Comonomeren eingebaut werden. Die Verwendung von internen Olefinen ist darüber hinaus nicht beschrieben, und der Doppelbindungsgehalt der Polymeren und deren Molmassenverteilung Mw/Mn ist ebenfalls nicht offenbart.

EP-A 0 454 231 beschreibt Katalysatorsysteme für die Polymerisation von Ethylen, Olefinen und Alkinen auf der Basis von kationischen Metallkomplexen von späten Übergangsmetallen (Gruppe VIII). Diese Katalysatoren sind aber Verunreinigungen gegenüber sehr empfindlich. Die erreichbaren Produktivitäten lassen ebenfalls zu wünschen übrig. Es werden keine polaren Copolymerisate beschrieben.

EP-A-569032 beschreibt Verfahren zur Herstellung von Dimeren aus olefinisch ungesättigten Monomeren in Gegenwart eines Katalysatorsystems, enthaltend ein Nickelsalz, eine Protonensäure und eine Chelatverbindung. Ferner ist Trialkylaluminium für die Herstellung der Dimeren nötig.

GB-A-2 274 252 offenbart Verfahren zur Herstellung von Copolymeren aus Kohlenmonoxid und olefinisch ungesättigten Verbindungen in Gegenwart eines Katalysatorsystems aus Palladium-, Cobalt- oder Nickelsalz, einer Protonensäure mit einem pKa-Wert <4 und einer zweizähnigen Chelatverbindung.

Der vorliegenden Erfindung lag die Aufgabe zugrunde, neue Verfahren zur Verfügung zu stellen, die die geschilderten Nachteile nicht aufweisen und mit denen Polymere erhalten werden, die insbesondere in linearer Sequenz eingebaute polare Comonomere enthalten.

Demgemäß wurde ein Verfahren zur Herstellung von Polymeren mit Molekulargewichten M_{w} größer 1000 g/mol durch Polymerisation von ausschließlich olefinisch ungesättigten Monomeren in Gegenwart eines Katalysatorsystems gefunden, welches aus
a) einem Metallhalogenid, -sulfat, -phosphat, -nitrat, -sulfonat oder -carboxylat mit einem Metall ausgewählt aus der Gruppe Ruthenium, Rhodium, Osmium, Iridium, Platin, Palladium,
b) einer Verbindung oder mehreren Verbindungen ausgewählt aus der Gruppe der Protonensäuren und Lewissäuren,
c) einer Chelatverbindung der allgemeinen Formel (I)

   R¹R²E¹-Z-E²R³R⁴ (I)

   in der die Substituenten und Indizes folgende Bedeutung haben:
   - E¹, E²: Stickstoff oder Phosphor,
   - Z: eine verbrückende Struktureinheit mit einem, zwei oder drei Brückenatomen auf Basis der Elemente Kohlenstoff oder Silicium,
   - R¹ bis R⁴: Substituenten ausgewählt aus der Gruppe der C₁- bis C₂₀-Kohlenstofforganischen und C₃- bis C₃₀-silicium-organischen Reste, wobei die Reste als weitere Elemente Stickstoff, Sauerstoff, Schwefel oder Halogenatome enthalten können,
als den aktiven Bestandteilen besteht,

Als Metalle in der Komponente (a) des erfindungsgemäßen Katalysatorsystems eignen sich die Platinmetalle wie Ruthenium, Rhodium, Osmium, Iridium und Platin sowie ganz besonders Palladium.

Man setzt diese Metalle in Form ihrer Salze ein. Als Salze sind Halogenide, Sulfate, Phosphate, Nitrate und Carboxylate, wie beispielsweise Acetate, Propionate, Oxalate, Citrate, Benzoate, sowie Sulfonsäuresalze wie zum Beispiel Methylsulfonate, Trifluormethylsulfonat und para-Toluolsulfonat geeignet. Vorzugsweise verwendet man Carboxylate, Sulfonsäurederivate und insbesondere Acetate.

Besonders geeignete Katalysatorkomponenten (a) sind Palladiumcarboxylate, vorzugsweise Palladiumacetat, Palladiumpropionat, Palladiumtrifluoracetat und Palladiumoxalat, sowie Palladiumsulfonate, vorzugsweise Palladiumtrifluormethansulfonat, Palladiummethansulfonat, Palladium-p-Toluolsulfonat, insbesondere verwendet man Palladiumacetat.

Als Katalysatorbestandteile (b) werden Lewis- und Protonensäuren und deren Mischungen eingesetzt.

Geeignete Protonensäuren (b) sind starke Mineralsäuren, vorzugsweise mit einem pKa-Wert kleiner als 3, wie Schwefelsäure und Perchlorsäure sowie starke organische Säuren wie beispielsweise Trichlor- und Trifluoressigsäure, sowie aus den Sulfonsäuren Methansulfonsäure, p-Toluolsulfonsäure und Benzolsulfonsäure.

Weiterhin sind die sauer wirkenden Salze starker Säuren mit schwachen Basen, wie beispielsweise Ammoniumsalze der vorher genannten Säuren geeignet.

Beispiele für geeignete Lewissäuren sind Halogenide der Elemente der Gruppe IIIA des Periodensystems der Elemente wie zum Beispiel Bortrifluorid, Bortrichlorid, Aluminiumtrifluorid, Aluminiumtrichlorid, Halogenide der Elemente der Gruppe VA des Periodensystems der Elemente wie Phosphorpentafluorid, Antimonpentafluorid, sowie Halogenide der Metalle der Nebengruppe IVB des Periodensystems der Elemente, wie beispielsweise Titantetrachlorid oder Zirconiumtetrachlorid. Weitere geignete Lewissäuren sind organisch substituierte Lewissäuren wie zum Beispiel Tris(pentafluorphenyl)boran.

Vorzugsweise verwendet man als Lewis-Säuren Bortrifluorid, Antimonpentafluorid oder Tris(pentafluorphenyl)boran.

Besonders bevorzugte Komponenten (b) sind solche, welche ein schwach koordinierendes konjugiertes Anion besitzen, d.h. ein Anion welches nur eine schwache Bindung zum Zentralmetall des Komplexes ausbildet, wie z.B. BF₄⁻, PF₆⁻, ClO₄⁻, CF₃CO₂⁻, CF₃SO₃⁻, p-Tosylat und Borate wie z.B. Brenzkatechinatoborat.

Im übrigen eignen sich als Katalysatorkomponenten (a) und (b) diejenigen, wie sie allgemein für Systeme mit Bisphosphinen aus den EP-A 501 576 und 516 238 bekannt sind.

Als Komponente (c) enthalten die Katalysatorsysteme eine Chelatverbindung der allgemeinen Formel (I).

Als Elemente E¹ und E² kommen Stickstoff oder Phosphor, insbesondere Phosphor, in Betracht. Die Chelatverbindung kann unterschiedliche Elemente E¹ und E² enthalten, so zum Beispiel Stickstoff und Phosphor.

Die verbrückende Struktureinheit Z ist eine Atomgruppierung, die die beiden Elemente E¹ und E² miteinander verbindet. Ein Atom oder aber zwei oder drei Atome auf Basis der Elemente Kohlenstoff oder Silicium bilden die verbindende Brücke zwischen E¹ und E². Mögliche freie Valenzen dieser Brückenatome können mannigfaltig abgesättigt sein, so zum Beispiel durch Substitution mit Wasserstoff, Elementen aus der Gruppe IVA, VA, VIA oder VIIA des Periodensystems der Elemente. Diese Substituenten können auch untereinander oder mit dem Brückenatom einen Ring bilden.

Gut geeignete verbrückende Struktureinheiten sind solche mit einem, zwei oder drei Elementen ausgewählt aus Kohlenstoff oder Silicium wie zum Beispiel Methylen (-CH₂-), 1,2-Ethylen (-CH₂-CH₂-), 1,3-Propylen (-CH₂-CH₂-CH₂-), 1,3-Disilapropylen (-R⁵R⁶Si-CH₂-SiR⁵R⁶-), Ethyliden (CH₃(H)C=), 2-Propyliden ((CH₃)₂C=), Diphenylmethylen ((C₆H₅)₂C=) oder ortho-Phenylen.

Als besonders geeignete verbrückende Struktureinheiten seien solche mit nur einem verbrückenden Atom genannt wie -CR⁵R⁶- oder -SiR⁵R⁶- worin R⁵ und R⁶ für Wasserstoff und C₁- bis C₁₀-Kohlenstofforganischer Rest steht. R₅ und R₆ können auch zusammen mit dem Brückenatom einen 3- bis 10-gliedrigen Ring bilden. Beispielhaft seien als einatomig verbrückende Struktureinheiten genannt Methylen (-CH₂-), Ethyliden (CH₃(H)C=), 2-Propyliden ((CH₃)₂C=), Diphenylmethylen ((C₆H₅)₂C=), Dialkylsilylen, wie Dimethylsilylen, Diphenylsilylen; weiterhin als cyclische Brückenglieder Cyclopropyliden, Cyclobutyliden, Cyclopentyliden, Cyclohexyliden. Bevorzugte verbrückende Struktureinheiten sind Methylen (-CH₂-), Ethyliden (CH₃(H)C=), 2-Propyliden ((CH₃)₂C=), Dimethylsilylen, Diphenylsilylen, insbesondere Methylen.

Als Kohlenstofforganische Reste R¹ bis R⁴ kommen aliphatische sowie cycloaliphatische und aromatische mit 1 bis 20 C-Atomen in Betracht, beispielsweise die Methyl-, Ethyl-, 1-Propyl-, 1-Butyl-, 1-Pentyl, 1-Hexyl- und 1-Octylgruppe. Ferner sind lineare Arylalkylgruppen mit jeweils 1 bis 10 C-Atomen im Alkylrest und 6 bis 20 C-Atomen im Arylrest geeignet, wie beispielsweise Benzyl- sowie Arylreste wie zum Beispiel Phenyl, Tolyl und andere substituierte Phenylgruppen.

Die Reste R¹ bis R⁴ sollen vorzugsweise soweit raumerfüllend sein, daß das Zentralatom, z.B. das Palladiumatom, mit dem die Atome E¹ und E² den aktiven Komplex bilden, weithin abgeschirmt wird. Reste, welche dieser Forderung genügen, sind beispielsweise cycloaliphatische Reste sowie verzweigte aliphatische Reste, darunter besonders solche mit Verzweigung in α-Position.

Als cycloaliphatische Reste kommen die Cyclopentyl-, Cyclohexylgruppen und Menthylgruppen sowie besonders bicyclische Reste wie die Norbornyl-, Pinanyl-, Bornylgruppe und Bicyclononylgruppe in beliebiger Verknüpfung des Ringgerüstes mit den Atomen E¹ und E² in Betracht. Vorzugsweise enthalten die cycloaliphatischen Reste insgesamt 5 bis 20 C-Atome.

Als verzweigte aliphatische Reste eignen sich C₃- bis C₂₀-, vorzugsweise C₃- bis C₁₂-Alkylreste, wie zum Beispiel die iso-Propyl-, iso-Butyl-, sec.-Butyl-, Neopentyl-und tert.-Butylgruppe, weiterhin Alkylaryl mit jeweils 1 bis 10 C-Atomen im Alkylrest und 6 bis 20 C-Atomen im Arylrest.

Besonders geeignet sind die tert.-Butylgruppe, die iso-Propylgruppe, die sec.-Butylgruppe und die Menthylgruppe.

Auch Alkylgruppen mit weiter außen liegender Verzweigung sind als Substituenten R¹ bis R⁴ gut geeignet, wie die iso-Butyl-, die 3-Methyl-but-2-yl- und 4-Methylpentylgruppe.

Auf die chemische Natur der Reste R¹ bis R⁴ kommt es nach den bisherigen Beobachtungen nicht entscheidend an, d.h. die Reste können auch Atome ausgewählt aus der Gruppe Halogen, Sauerstoff, Schwefel, Stickstoff, Silicium enthalten, beispielsweise die Bis(trimethylsilyl)methylgruppe. Auch funktionelle Gruppen wie zum Beispiel Hydroxy, Alkoxy und Cyan, die sich unter den Polymerisationsbedingungen inert verhalten, kommen in diesem Zusammenhang in Betracht.

Bevorzugte Heterosubstituenten R¹ bis R⁴ sind C₃- bis C₃₀-Siliciumorganische Reste, das heißt tetravalente Siliciumatome die einerseits an E¹ oder E² gebunden sind und deren übrige Valenzen mit drei Kohlenstofforganischen Resten abgesättigt sind, wobei die Kohlenstoffzahl aller direkt oder indirekt an Silicium gebundenen Reste im Bereich von drei bis dreißig liegt. Beispielsweise seien genannt die Trimethylsilyl-, tert.-Butyldimethylsilyl- oder Triphenylsilylgruppe, insbesondere die Trimethylsilylgruppe.

Vorzugsweise verwendet man als Komponente (c) mit einer Methylengruppe verbrückte Diphosphane, besonders bevorzugt mit C₃- bis C₁₀-cycloaliphatischen oder verzweigten C₃- bis C₂₀-aliphatischen Resten R¹ bis R⁴ substituierte methylenverbrückte Diphosphane, wie beispielsweise Bis(di-tert.-butylphosphino)methan, [(Di-tert.-butylphosphino) (Di-cyclohexylphosphino]methan oder Bis(di-cyclohexylphosphino)methan deren gute Eignung für das erfindungsgemäße Verfahren derzeit der Methylenverknüpfung der beiden Phosphoratome und der räumlichen Struktur der Reste R¹ bis R⁴ zugeschrieben wird.

Eine ganz besonders bevorzugte Verbindung als Komponente (c) ist das Bis(di-tert.-butylphosphino)methan.

Das Verhältnis der Katalysatorbestandteile (a), (b) und (c) zueinander wird im allgemeinen so gewählt, daß das molare Verhältnis der Metallverbindung (a) zur Säure (b) 0,01 : 1 bis 100 : 1, bevorzugt 0,1 : 1 bis 1 : 1 und das molare Verhältnis der Metallverbindung (a) zum Chelatliganden (c) 0,01 : 1 bis 10 : 1, bevorzugt 0,1 : 1 bis 2 : 1 beträgt.

Das Katalysatorsystem wird erfindungsgemäß für die Herstellung von Polymeren aus olefinisch ungesättigten Monomeren eingesetzt.

Als olefinisch ungesättigte Verbindungen kommen grundsätzlich alle Monomere dieser Verbindungsklasse in Betracht. Insbesondere können Olefine, Diolefine oder mit funktionellen Gruppen substituierte Olefine sowie Vinylaromaten eingesetzt werden. Ebenfalls geeignet sind C₂- bis C₂₀-Alk-1-ene, interne C₄- bis C₂₀-Alkene, C₄- bis C₂₀-Diolefine oder a-β-ungesättigte Carbonsäuren oder deren Derivate.

Geeignet sind besonders Ethylen und C₃-C₁₀-Alk-1-ene wie Propylen, 1-Buten, 1-Penten, 1-Hexen, 1-Hepten, 1-Octen, 1-Nonen und 1-Decen. Es können auch interne E- oder Z-Olefine wie 2-Buten, 2-Penten, 2- und 3-Hexen, vorteilhaft eingesetzt werden; ferner eignen sich als Monomere Diene wie 1,3-Butadien, 1,4-Hexadien, 1,5-Hexadien, sowie daneben Cycloolefine wie Cyclopenten, Cyclohexen, Norbornen und Norbornadien, Cyclopentadien und Dicyclopentadien.

Als olefinisch ungesättigte aromatische Monomere seien in erster Linie Styrol und α-Methyl-styrol genannt.

Besondere Bedeutung als Monomere haben ferner mit funktionellen Gruppen substituierte Olefine. Als funktionelle Gruppen kommen in Frage die Carboxylgruppe, -COOH und deren Derivate, wie zum Beispiel Ester, Halogenide und Amide, ferner die Hydroxylgruppe, die Cyangruppe, -CN, Ketogruppe, Aldehydgruppe und Carboxylatgruppe sowie die Silylgruppe, -SiR₃, wobei R Wasserstoff oder ein C₁- bis C₁₅- organischer Rest bedeutet.

Besonders geeignete, mit funktionellen Gruppen substituierte Olefine sind Acrylsäure und Methacrylsäure sowie deren Derivate, darunter insbesondere die Nitrile, die Amide und die C₁-C₁₀-Alkylester wie beispielsweise Acrylnitril, Methacrylnitril, Methylacrylat, Ethylacrylat, Propylacrylat, Butylacrylat, tert.-Butylacrylat, 2-Ethylhexylacrylat, Methylmethacrylat, Ethylmethacrylat, Propylmethacrylat. Weitere geeignete Monomere sind Vinylchlorid, Vinylacetat, Vinylpropionat, Maleinsäureanhydrid und N-Vinylpyrrolidon.

Selbstverständlich können auch Mischungen verschiedener Monomerer eingesetzt werden.

Das molare Verhältnis zwischen den unterschiedlichen Monomeren kann weitgehend frei gewählt werden.

Die Polymerisationsbedingungen sind an sich unkritisch. Die Polymerisationen können sowohl absatzweise als auch kontinuierlich durchgeführt werden.

Drücke von 100 bis 500000 kPa, vorzugsweise 200 bis 350000 kPa und insbesondere 500 bis 30000 kPa, Temperaturen von (-50) bis 400 °C, bevorzugt 20 bis 250 °C und insbesondere 40 bis 150 °C haben sich als geeignet erwiesen.

Polymerisationsreaktionen mit Hilfe der erfindungsgemäßen Katalysatorsysteme lassen sich in der Gasphase, in Suspension, in flüssigen und in überkritischen Monomeren und in, unter den Polymerisationsbedingungen inerten, Lösungsmitteln durchführen.

Geeignete inerte Lösungsmittel sind Alkohole wie Methanol, Ethanol, Propanol, i-Propanol, 1-Butanol und tert.-Butanol, Sulfoxide und Sulfone, beispielsweise Dimethylsulfoxid, Ester wie Essigester und Butyrolacton, Ether wie Tetrahydrofuran, Dimethylethylenglycol und Diisopropylether sowie aromatische Lösungsmittel wie Benzol, Toluol, Ethylbenzol oder Chlorbenzol oder Gemische derselben.

Das Molekulargewicht der nach dem erfindungsgemäßen Verfahren hergestellten Polymere läßt sich durch die Variation der Polymerisationstemperatur und durch den Zusatz von Wasserstoff in üblicher Weise regeln.

Mit dem erfindungsgemäße Verfahren können selbst in polaren protischen Lösungsmitteln, wie zum Beispiel Methanol, hochmolekulare Polymere (Mw beispielsweise größer 1000) erhalten werden. Dies ist besonders vorteilhaft im Falle der Copolymeren mit polaren oder unpolaren Comonomeren.

Die unter Verwendung des erfindungsgemäßen Verfahrens hergestellten Polymere zeichnen sich durch ein Molekulargewicht M_{w} größer 1000 g/mol und im allgemeinen durch enge Molmassenverteilung und hohen Anteil an Doppelbindungen aus.

Die nach dem erfindungsgemäßen Verfahren hergestellten Polymere eignen sich zur Herstellung von Formkörpern, insbesondere von Formkörpern für Verpackungen sowie zur Herstellung von Folien, Fasern und Haftvermittler und lassen sich aufgrund ihrer reaktiven Doppelbindungen leicht chemisch modifizieren.

### Beispiele

In einem 0,3-l-Autoklaven wurden Methanol, Palladiumacetat, Bis(di-tert.-butylphosphino)methan und p-Toluolsulfonsäure und gegebenenfalls das Co-Monomer vorgelegt. Danach wurde bei der gewünschten Temperatur Ethylen bis zu dem gewünschten Gesamtdruck (siehe Tabelle 1) aufgepreßt und 5 Stunden lang polymerisiert. Die Reaktionstemperatur und der Druck wurden während der gesamten Reaktionsdauer konstant gehalten, wonach die Polymerisation durch Abkühlen und Entspannen des Autoklaven abgebrochen, die Reaktionsmischung filtriert und das Polymerisat isoliert wurde.

Die Verfahrensparameter, eingesetzte Mengen an Katalysator und Lösungsmittel sowie die erhaltenen Mengen an Polymerisat sind der Tabelle 1, die Polymereigenschaften und analytischen Daten sind der Tabelle 2 zu entnehmen.

Die mit dem erfindungsgemäßen Verfahren hergestellten Polymere wurden mittels GPC-, FT-IR- und ¹³C-NMR-Analyse charakterisiert. Die Molekulargewichte Mw und Mn und deren Verteilung Mw/Mn wurden mittels Gelpermeationschromatographie (GPC) in 1,2,4-Trichlorbenzol bei 135 °C (Polyethylenstandard) bestimmt. Die ¹³C-NMR-Analysen wurden in C₂D₂Cl₄ als Lösungsmittel bei 120 °C durchgeführt. Die Messung der Schmelzpunkte wurde mit der Methode der DSC durchgeführt.

Erläuterung der Abkürzungen:
Pdac = Palladiumacetat, Pd(OAc)₂
dtbpm = Bis (ditert.-butylphosphino)methan
p-TSS = p-Toluolsulfonsäure
MA = Methylacrylat
Raff. II = Raffinat II = 45 Vol.-% 1-Buten, 35 Vol.-% 2-Butene, 20 Vol.-% Butane

**Tabelle 1:**

| Verfahrensparameter | | | | | |
|---|---|---|---|---|---|
| Beispiel | Katalysator/(mmol) | Druck [kPa] | Temp. [°C] | Comonomer/[g] | Ausbeute [g] |
| 1 | Pdac/0,1 | 6000 | 85 | --- | 2,0 |
| | dtbpm/0,26 | | | | |
| | p-TSS/1,0 | | | | |
| 2 | Pdac/0,2 | 6000 | 85 | --- | 3,0 |
| | dtbpm/0,8 | | | | |
| | p-TSS/0,7 | | | | |
| 3 | Pdac/0,1 | 20000 | 85 | --- | 2,9 |
| | dtbpm/0,26 | | | | |
| | p-TSS/1,0 | | | | |
| 4 | Pdac/0,1 | 20000 | 85 | --- | 3,3 |
| | dtbpm/0,26 | | | | |
| | p-TSS/1,0 | | | | |
| 5 | Pdac/0,1 | 6000 | 85 | MA/10,0 | 2,3 |
| | dtbpm/0,26 | | | | |
| | p-TSS/1,0 | | | | |
| 6 | Pdac/0,2 | 6000 | 85 | MA/10,0 | 5,2 |
| | dtbpm/0,52 | | | | |
| | p-TSS/2,0 | | | | |
| 7 | Pdac/0,1 | 6000 | 85 | Raff.II/30 ml | 1,5 |
| | dtbpm/0,26 | | | | |
| | p-TSS/1,0 | | | | |
| 8 | Pdac/0,1 | 6000 | 100 | 2-Hexen/5,0 | 1,8 |
| | dtbpm/0,26 | | | | |
| | p-TSS/1,0 | | | | |

**Tabelle 2:**

| Eigenschaften der nach dem erfindungsgemäßen Verfahren hergestellten Polymere | | | | |
|---|---|---|---|---|
| Beispiel | Schmp [°C] | Mw | Mw/Mn | Summe C=C-Doppelbindung [1/1000 C] |
| 1 | 113 | 3201 | 1,85 | 7,35 |
| 2 | 108 | 2238 | 1,89 | --- |
| 3 | 119 | 3457 | 1,83 | 6,88 |
| 4 | 118 | 3637 | 1,81 | 6,64 |
| 5 | 106 | 2800 | 1,80 | 9,00 |
| 6 | 107 | 6200 | 2,50 | 8,00 |
| 8 | 90 | 1430 | 2,40 | 10,78 |

## Patentansprüche

1. Verfahren zur Herstellung von Polymeren mit Molekulargewichten M_{w} größer 1000 g/mol durch Polymerisation von ausschließlich olefinisch ungesättigten Monomeren in Gegenwart eines Katalysatorsystems, welches aus
a) einem Metallhalogenid, -sulfat, -phosphat, -nitrat, -sulfonat oder -carboxylat mit einem Metall ausgewählt aus der Gruppe Ruthenium, Rhodium, Osmium, Iridium, Platin, Palladium,
b) einer Verbindung oder mehreren Verbindungen ausgewählt aus der Gruppe der Protonensäuren und Lewissäuren,
c) einer Chelatverbindung der allgemeinen Formel (I)
R¹R²E¹-Z-E²R³R⁴ (I)
in der die Substituenten und Indizes folgende Bedeutung haben:
E¹, E² Stickstoff oder Phosphor,
Z eine verbrückende Struktureinheit mit einem, zwei oder drei Brückenatomen auf Basis der Elemente Kohlenstoff oder Silicium,
R¹ bis R⁴ Substituenten ausgewählt aus der Gruppe der C₁- bis C₂₀-Kohlenstofforganischen und C₃- bis C₃₀-siliciumorganischen Reste, wobei die Reste als weitere Elemente Stickstoff, Sauerstoff, Schwefel oder Halogenatome enthalten können,
als den aktiven Bestandteilen besteht.

2. Verfahren nach Anspruch 1, wobei Z-CR⁵R⁶- oder - SiR⁵R⁶- bedeutet und R⁵ und R⁶ für Wasserstoff und C₁- bis C₁₀-Kohlenstofforganischer Rest steht.

3. Verfahren nach den Ansprüchen 1 bis 2, wobei E¹ und E² Phosphor bedeutet.

4. Verfahren nach den Ansprüchen 1 bis 3, wobei R¹ bis R⁴ C₁- bis C₂₀-aliphatischer oder C₃- bis C₂₀-cycloaliphatischer Rest bedeutet.

5. Verfahren nach den Ansprüchen 1 bis 4, in welchem man als olefinisch ungesättigte Verbindungen Olefine, Diolefine oder mit funktionellen Gruppen substituierte Olefine sowie Vinylaromaten einsetzt.

6. Verfahren nach den Ansprüchen 1 bis 5, in welchem als olefinisch ungesättigte Verbindungen C₂- bis C₂₀-Alk-1-ene, interne C₄- bis C₂₀-Alkene, C₄- bis C₂₀-Diolefine oder α-β-ungesättigte Carbonsäuren oder deren Derivate eingesetzt werden.

## Claims

1. A process for preparing polymers of molecular weights greater than 1000 g/mol by polymerization of exclusively olefinically unsaturated monomers in the presence of a catalyst system which comprises as active constituents
a) a metal halide, metal sulfate, metal phosphate, metal nitrate, metal sulfonate or metal carboxylate with a metal selected from the group consisting of ruthenium, rhodium, osmium, iridium, platinum, palladium,
b) one or more compounds selected from the group consisting of protic acids and Lewis acids,
c) a chelating compound of the formula (I)
R¹R²E¹-Z-E²R³R⁴ (I)
where the substituents and indices have the following meanings:
E¹, E² are nitrogen or phosphorus,
Z is a bridging structural unit having one, two or three bridge atoms based on carbon or silicon,
R¹ to R⁴ are substituents selected from the group consisting of C₁-C₂₀-organic and C₃-C₃₀-organosilicon radicals, where the radicals may also contain nitrogen, oxygen, sulfur or halogen atoms.

2. A process as claimed in claim 1, wherein Z is -CR⁵R⁶- or-SiR⁵R⁶- and R⁵ and R⁶ are each hydrogen and a C₁-C₁₀-organic radical.

3. A process as claimed in any of claims 1 to 2, wherein E¹ and E² are phosphorus.

4. A process as claimed in any of claims 1 to 3, wherein R¹ to R⁴ are each a C₁-C₂₀-aliphatic or C₃-C₂₀-cycloaliphatic radical.

5. A process as claimed in any of claims 1 to 4, wherein the olefinically unsaturated compounds used are olefins, diolefins or olefins substituted by functional groups, or vinylaromatics.

6. A process as claimed in any of claims 1 to 5, wherein the olefinically unsaturated compounds used are C₂-C₂₀-alk-1-enes, internal C₄-C₂₀-alkenes, C₄-C₂₀-diolefins or α-β-unsaturated carboxylic acids or their derivatives.

## Revendications

1. Procédé pour la préparation de polymères dont les poids moléculaires M_{w} sont supérieurs à 1000 g/mole par polymérisation de monomères exclusivement à insaturation oléfinique en présence d'un système de catalyseurs qui est constitué par
a) un halogénure, un sulfate, un phosphate, un nitrate, un sulfonate ou un carboxylate métallique avec un métal choisi parmi le groupe comprenant le ruthénium, le rhodium, l'osmium, l'iridium, le platine, le palladium,
b) un composé ou plusieurs composés choisis parmi le groupe comprenant des acides protoniques et des acides de Lewis,
c) un composé chélaté répondant à la formule générale (I)
R¹R²E¹-Z-E²R³R⁴ (I)
dans laquelle les substituants et les indices ont la signification ci-après:
E¹, E² représentent un atome d'azote ou un atome de phosphore,
Z représente une unité de structure faisant pont comprenant un, deux ou trois atomes pontaux à base des éléments de carbone ou de silicium,
R¹ à R⁴ représentent des substituants choisis parmi le groupe comprenant des radicaux d'organocarbone en C₁-C₂₀ et des radicaux d'organosilicium en C₃-C₃₀, les radicaux pouvant contenir, comme éléments supplémentaires, un atome d'azote, un atome d'oxygène, un atome de soufre ou un atome d'halogène,
à titre des constituants actifs.

2. Procédé selon la revendication 1, dans lequel Z représente un groupe -CR⁵R⁶- ou un groupe -SiR⁵R⁶- et R⁵ et R⁶ représentent un atome d'hydrogène et un radical d'organocarbone en C₁-C₁₀.

3. Procédé selon les revendications 1 à 2, dans lequel E¹ et E² représentent un atome de phosphore.

4. Procédé selon les revendications 1 à 3, dans lequel R¹ à R⁴ représentent un radical aliphatique en C₁-C₂₀ ou un radical cycloaliphatique en C₃-C₂₀.

5. Procédé selon les revendications 1 à 4, dans lequel, on met en oeuvre, à titre de composés à insaturation oléfinique, des oléfines, des dioléfines ou des oléfines substituées avec des groupes fonctionnels, ainsi que des composés vinylaromatiques.

6. Procédé selon les revendications 1 à 5, dans lequel, on met en oeuvre, à titre de composés à insaturation oléfinique, des alc-1-ènes en C₂-C₂₀, des alcènes internes en C₄-C₂₀, des dioléfines en C₄-C₂₀ ou des acides carboxyliques à insaturation α,β ou encore leurs dérivés.
